# EUROPÄISCHE PATENTANMELDUNG

(11) **EP 1 142 729 A2**
(43) Veröffentlichungstag der Anmeldung: **10.10.2001**
(21) Anmeldenummer: 01108235.1
(22) Anmeldetag: 31.03.2001
(51) Int. Cl.: B60B 33/00

(54) **Einrichtung zur Befestigung eines Tragelementes im Bereich eines Führungselementes**

(30) Priorität: 03.04.2000 DE 10016263
(71) Anmelder: Schulte, Arnolf, D-42929 Wermelskirchen (DE)
(72) Erfinder: Schulte, Arnolf, D-42929 Wermelskirchen (DE)
(74) Vertreter: Spannagel, Hans-Achim

(57) **Zusammenfassung**

Einrichtung zur Befestigung eines einen Rotationskörper, insbesondere eine Laufrolle, aufnehmenden Tragelementes (1) im Bereich eines Führungselementes (7), mit einem im Bereich des Tragelementes vorgesehenen Zapfen sowie einem sich zwischen Trag- und Führungselement erstreckenden Körper, wobei das Tragelement, das Führungselement und der Körper (5) dergestalt durch Ineinanderstecken miteinander verbindbar sind, daß mindestens eines der ineinander steckbaren Bauteile mindestens einen elastisch nachgebbaren Rastbereich beinhaltet, der mit einem korrespondierenden Aufnahmebereich mindestens eines weiteren Bauteiles in Wirkverbindung bringbar ist.

## Beschreibung

Die Erfindung betrifft eine Einrichtung zur Befestigung eines einen Rotationskörper, insbesondere eine Laufrolle, aufnehmenden Tragelementes im Bereich eines Führungselementes.

Der DE A 3521794 ist eine Laufrolle zu entnehmen, die ein etwa gabelförmig ausgebildetes Grundbauteil zur Aufnahme eines Rades beinhaltet. Der außerhalb des Gabelbereiches vorgesehene zylindrische Bereich des Grundbauteiles ist gegebenenfalls über Zwischenelemente mit einem Führungselement, z.B. einem Rohr oder einem Stift in Eingriff bringbar. Das Führungselement selber ist Teil eines verfahrbaren Elementes, wie beispielsweise eines Krankenbettes, eines Möbelstückes oder dergleichen.

Allgemein bekannt ist das Tragelement mit dem Führungselement dergestalt zu verbinden, dass im Bereich des Führungselementes mindestens eine sich von der inneren zur äußeren Umfangsfläche erstreckende Ausnehmung gegeben ist, dass im Tragelement eine mit einem Gewinde versehene Bohrung vorgesehen ist, und dass mittels mindestens einer Schraube eine verdrehsichere Verbindung zwischen Tragelement und Führungselement herbeigeführt wird.

Bei Vorhandensein mehrerer Gewindebohrungen im Bereich des Tragelementes kann es aus Toleranzgründen dazu kommen, dass die Ausnehmungen im Bereich des Führungselementes nicht deckungsgleich mit den Gewindebohrungen sind, so dass die Verbindung zwischen Trag- und Führungselement nur unter erschwerten Bedingungen herbeigeführt werden kann.

Ziel des Erfindungsgegenstandes ist es, eine einfach bauende Verbindungsart zwischen Trag- und Führungselement herbeizuführen, die einerseits die Zentriermöglichkeit verbessert und die Verdrehsicherheit gewährleistet und andererseits auch eine einfache Demontage mit sich bringt.

Dieses Ziel wird erreicht durch eine Einrichtung zur Befestigung eines einen Rotationskörper, insbesondere eine Laufrolle, aufnehmenden Tragelementes im Bereich eines Führungselementes, mit einem im Bereich des Tragelementes vorgesehenen Zapfen sowie einem sich zwischen Trag- und Führungselement erstreckenden Körper, wobei das Tragelement, das Führungselement und der Körper dergestalt durch Ineinanderstecken miteinander verbindbar sind, daß mindestens eines der ineinander steckbaren Bauteile mindestens einen elastisch nachgebbaren Rastbereich beinhaltet, der mit einem korrespondierenden Aufnahmebereich mindestens eines weiteren Bauteiles in Wirkverbindung bringbar ist.

Vorteilhafte Weiterbildungen des Erfindungsgegenstandes sind den Unteransprüchen zu entnehmen.

Der vorzugsweise aus Kunststoff bestehende, etwa hülsenförmig ausgebildete Körper nimmt einerseits den zylindrisch oder mehreckig ausgebildeten Zapfen des Tragelementes auf, der andererseits selber im Bereich des Führungselementes eng geführt wird.

Die Zentrierung ist einfach herbeiführbar, indem eine grobe Montagerichtung vorgegeben wird. Sobald das Restelement, einen Rastbereich bildend, im Bereich der Ausnehmung, einen Aufnahmebereich bildend, sichtbar wird, kann die Verbindung problemlos herbeigeführt werden.

Die verdrehsichere Verbindung beispielsweise zwischen Führungselement und Hülse wird einem weiteren Gedanken der Erfindung gemäß nun dadurch erreicht, dass im Bereich der Hülse beispielsweise federnd ausgebildete mit Nocken versehene Zungen eingebracht sind, die beim Einbringen des zylindrischen oder mehreckigen Bereiches der Hülse in das vorzugsweise rohrförmig ausgebildete Führungselement zunächst radial nach innen ausweichen und anschließend in die im Führungselement gegebenen Ausnehmungen einrasten und somit die Verbindung herstellen. Der zapfenartige Ansatz des Tragelementes wird im Anschluss an seine Montage durch die federnden Zungen zumindest geklemmt, so dass ein Herausfallen des Tragelementes aus der Hülse nicht oder nur unter erschwerten Bedingungen stattfinden kann. Bei Bedarf kann zur Erhöhung der radial nach innen wirkenden Klemmkraft mindestens eine der federnden Zungen mit einer Verdickung versehen werden.

Die Verbindung beispielsweise zwischen Führungselement und Tragelement kann dadurch wieder gelöst werden, dass der jeweilige Rastnocken mit einem Werkzeug radial nach innen gedrückt und das Führungselement abgezogen wird.

Neben der verdrehsicheren Verbindung wird gleichzeitig die zugehörige Ausnehmung im Führungselement verschlossen, so dass der Eintritt von Schmutz in den Innenraum des Führungselementes weitestgehend verhindert wird.

Die Hülse besteht vorzugsweise aus einem geeigneten Kunststoff, so dass die federnd ausgebildeten Zungen problemlos einstückig daran angeformt werden können, ohne dass es zu Entformungsproblemen kommt.

Vorzugsweise werden zwei einander gegenüberliegende federnd ausgebildete Zungen vorgesehen, die in entsprechende Ausnehmungen des Führungselementes eingreifen und so auch bei Beschädigungen im Bereich eines der Rastelemente die Verdrehsicherheit aufrecht erhalten.

Alternative Ausgestaltungen zur Erlangung der gewünschten Zentrierung bzw. Verdrehsicherheit sind in den Unteransprüchen beschrieben, wobei es für die Erfindung unerheblich ist, welches der genannten Bauteile gegenüber mindestens einem weiteren Bauteil festgelegt wird.

Der Erfindungsgegenstand ist anhand eines Ausführungsbeispieles in der Zeichnung dargestellt und wird wie folgt beschrieben. Es zeigen:
- Figur 1: Verschiedene Ansichten eines gabelförmig ausgebildeten Tragkörpers
- Figuren 2 und 3: Einzeldarstellungen der Bauteile des Tragkörpers gemäß Figur 1 in verschiedenen Ansichten
- Figuren 4 bis 8: Alternative Ausgestaltungsformen zu Figuren 1 bis 3

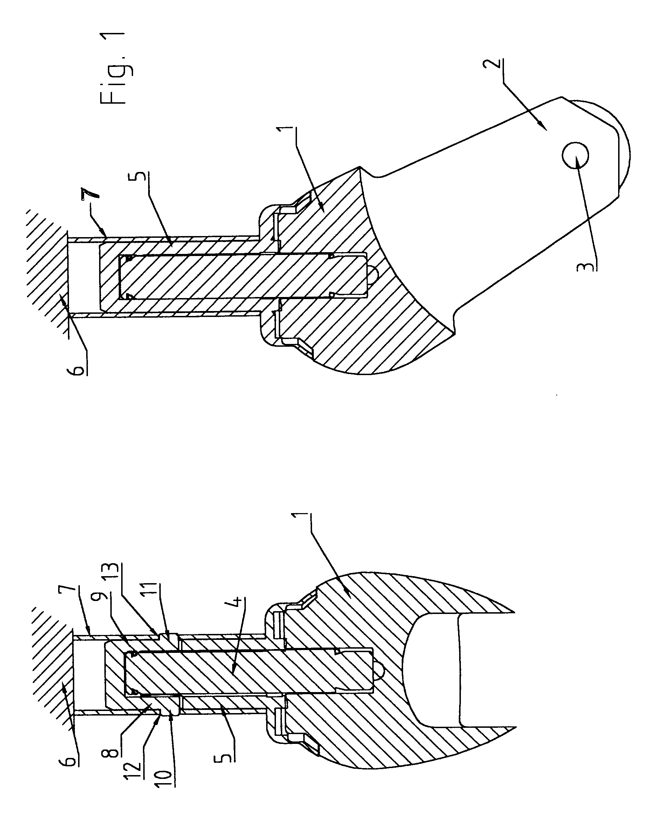

Figur 1 zeigt in verschiedenen Ansichten ein gabelförmig ausgebildetes Tragelement 1, das im Bereich seitens einen freien Endes 2 zur Aufnahme eines nicht weiter dargestellten Rades vorgesehen ist. Angedeutet ist lediglich die Rotationsachse 3. Das Tragelement 1 nimmt einen Zapfen 4 auf, der von einem hülsenartig ausgebildeten Körper 5 umschlossen ist. Ein im Bereich beispielsweise eines Krankenbettes 6 vorgesehenes rohrartig ausgebildetes Führungselement 7 soll nun mit dem Tragelement 1 verbunden werden. Das Rohr 7 wird über die Hülse 5 gestülpt und ist mit selbiger zu verbinden. Die Verbindung erfolgt dergestalt, dass die vorzugsweise aus Kunststoff bestehende Hülse 5 einander gegenüber liegende federnde Zungen 8,9 aufweist, welche mit angeformten Rastnocken 10,11, Rastbereiche bildend, versehen sind. Die Rastnocken 10,11 greifen in ebenfalls einander gegenüber liegende Ausnehmungen 12,13, Aufnahmebereiche bildend, im Bereich des Rohres 7 ein. Im Einbauzustand wird der Zapfen 4 durch gegebenenfalls auf der Rückseite der federnden Zungen 8 vorhandene Verdickungen geklemmt, sofern durch Toleranzen nicht bereits so eine Klemmung zwischen Hülse 5 und Zapfen 4 herbeigeführt werden kann.

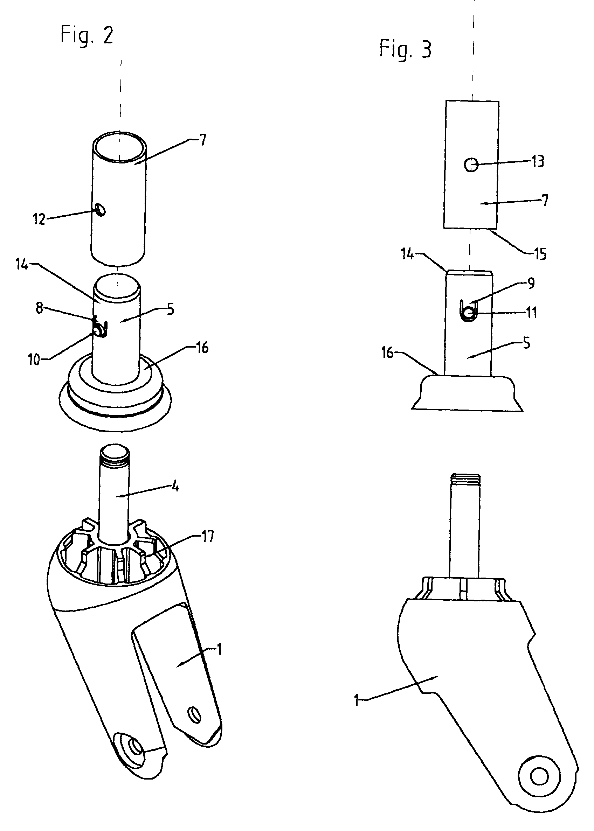

Die Figuren 2 und 3 zeigen die einzelnen Bauteile gemäß Figur 1. Erkennbar sind das gabelförmig ausgebildete Tragelement 1, der Zapfen 4, die Hülse 5 sowie das Rohr 7. Im Bereich des Rohres 7 sind die einander gegenüber liegenden Ausnehmungen 12,13 vorgesehen. Die aus Kunststoff bestehende Hülse 5 weist federnd ausgebildete Zungen 8,9 auf, die einstückig aus dem Kunststoffmaterial herausgeformt sind. Jede der federnden Zungen 8,9 ist mit nockenartig ausgebildeten Rastelementen 10,11 versehen. Wird nun das Führungselement 7 auf den Endbereich 14 der Hülse 5 aufgeschoben, wird beim weiteren axialen Aufschieben des Führungselementes 7 die Nocken 10,11 der federnden Zungen 8,9 radial nach innen gebogen. Die untere Stirnfläche 15 des Führungselementes 7 kann im Einbauzustand auf einem kragenartigen Ansatz 16 der Hülse 5 aufliegen, der wiederum verdrehsicher mit dem oberen Bereich 17 des Tragelementes 1 verbunden ist. Sobald das Führungselement 7 seine Einbauposition erreicht hat, können die Rastnocken 10,11 in die Ausnehmungen 12,13 des Führungselementes 7 eingreifen und somit die verdrehsichere Verbindung zwischen diesen Bauteilen herstellen. Die Rastnocken 10,11 sind so geformt, dass sie die Ausnehmungen 12,13 im Wesentlichen ausfüllen, so dass das Eindringen von Schmutz in diesen Bereich vermieden wird. Wie bereits zu Figur 1 angedeutet, wird der Zapfen 4 im Bereich der federnden Zungen 8,9 zumindest eng geführt, so dass das Tragelement 1 nicht aus der Hülse 5 herausfallen kann. Bei Bedarf können hier nicht weiter dargestellte Verdickungen im Bereich der federnden Zungen 8,9 vorgesehen werden, die zu einer erhöhten Klemmung des Zapfens 4 gegenüber der Hülse 5 führen und somit das Herausfallen weiterhin erschwert wird. Größere Anforderungen sind hier nicht gegeben, da die Gewichtskraft beispielsweise des Krankenbettes 6, auf dem Tragelement 4 ruht und dies in der Regel auch so bleibt.

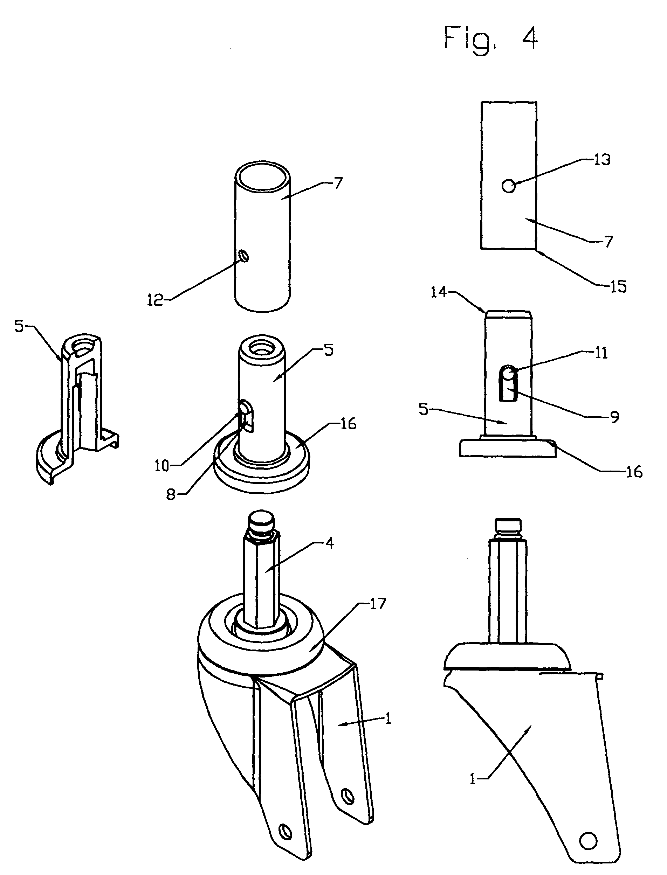

Die Figuren 4 bis 8 zeigen alternative Ausgestaltungsformen zu den Figuren 1 bis 3 zur Erlangung der gewünschten Zentrierung/Verdrehsicherung. Gleiche Bauteile sind mit gleichen Bezugszeichen versehen.

Die Figuren 4 bis 7 weisen zumindest den hülsenartig ausgebildeten Körper 5 sowie das rohrartig ausgebildete Führungselement 7 auf. Figur 4 beinhaltet darüber hinaus auch das gabelförmig ausgebildete Tragelement 1 sowie den damit in Wirkverbindung stehenden Zapfen 4. Abweichend zu den Figuren 1 bis 3 ist der Zapfen 4 mit einem mehreckigen, vorzugsweise sechseckigen Querschnitt versehen, wobei auch die den Zapfen 4 aufnehmenden Innenraumbereiche der Hülse 5 in entsprechender Weise ausgebildet sind. Das Rohr 7 wird analog zu den Figuren 1 bis 3 über die Hülse 5 gestülpt und ist mit selbiger in zentrierter Form verdrehsicher zu verbinden. Die Verbindung erfolgt dergestalt, daß die Hülse 5 einander gegenüberliegende federnde Zungen 8,9 aufweist, welche mit geformten Rastnocken 10,11 versehen sind. Die Rastnocken 10,11 greifen in ebenfalls einander gegenüberliegende Ausnehmungen 12,13 im Bereich des Führungselementes 7 ein. Wird nun das Führungselement 7 auf den Endbereich 14 der Hülse 5 aufgeschoben, werden beim weiteren axialen Aufschieben das Führungselement 7 die Nocken 10,11 der federnden Zungen 8,9 radial nach innen gebogen. Die untere Stirnfläche 15 des Führungselementes 7 kann im Einbauzustand auf einen kragenartigen Ansatz 16 der Hülse 5 aufliegen, der wiederum verdrehsicher mit dem oberen Bereich 17 des Tragelementes 1 verbunden ist. Sobald das Führungselement 7 seine Einbauposition erreicht hat, können die Rastnocken 10,11 in die Ausnehmungen 12,13 des Führungselementes 7 eingreifen und somit die verdrehsichere Verbindung zwischen diesen Bauteilen herstellen. Analog zu Figur 1 wird auch in Figur 4 der Zapfen 4 im Bereich der federnden Zungen 8,9 zumindest eng geführt, so daß das Tragelement 1 nicht aus der Hülse 5 herausfallen kann.

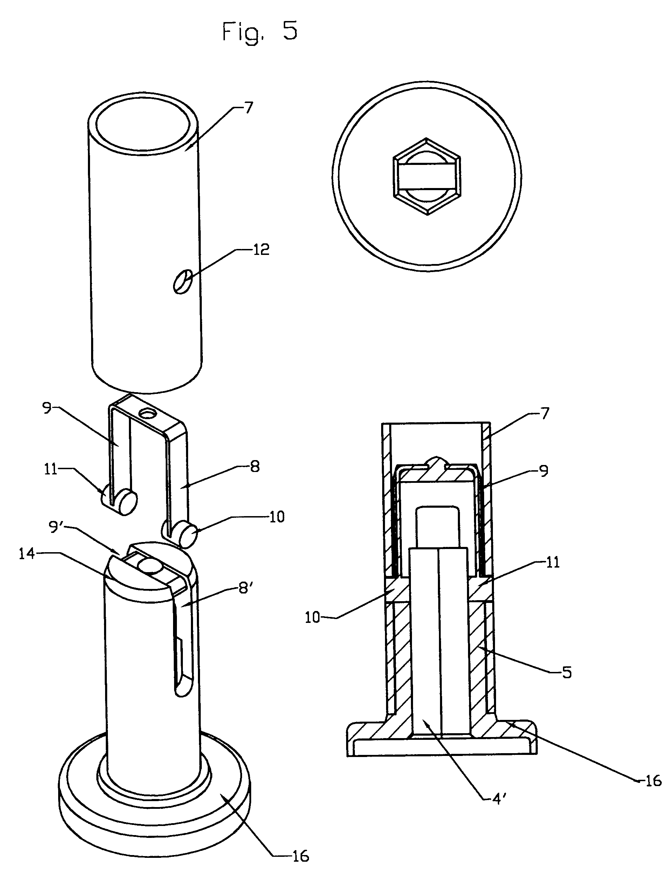

In Figur 5 ist veranschaulicht, daß die Rastbereiche 10,11, gebildet durch Rastnocken im Bereich eines federnde Zungen 8,9 aufweisenden, separaten Bügels vorgesehen sind. Im Endbereich 14 sind entsprechende Schlitze 8',9' gebildet, die zur Aufnahme der federnden Zungen 8,9 dienen. Die verdrehsichere Aufnahme des hier nicht weiter dargestellten Zapfens im Bereich der Hülse 5 erfolgt über den mehrkantigen Aufnahmebereich 4'. Die Arretierung erfolgt, wie bereits in den Figuren 1 bis 4 zum Ausdruck gebracht, über Ausnehmungen 12, die im Bereich des Führungselementes 7 vorgesehen sind.

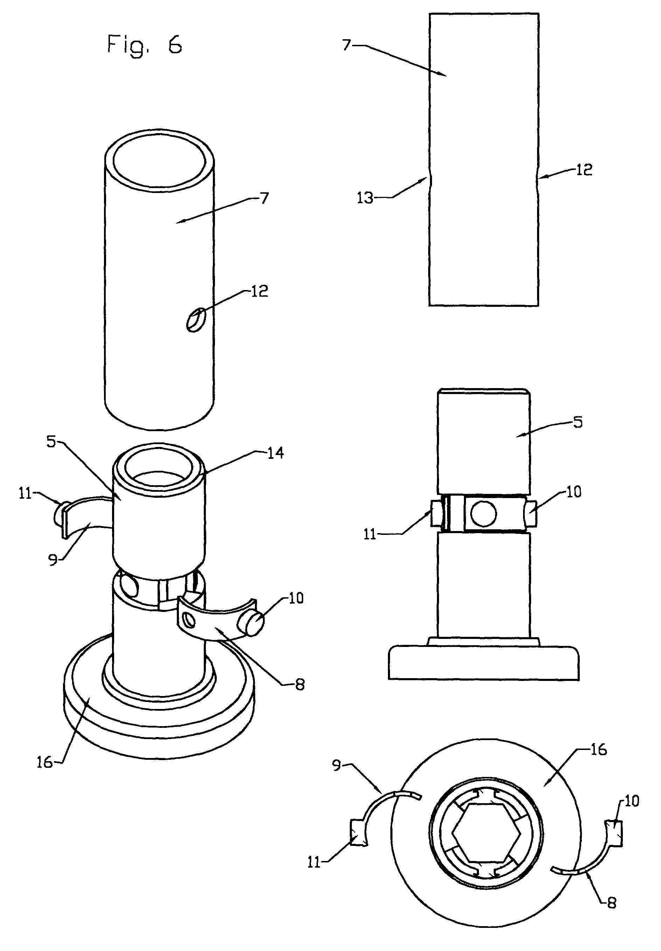

Figur 6 zeigt eine weitere Alternative zur Ausgestaltung der Rastbereiche. Hier sind im Bereich federnder Zungen 8,9 angeformte Rastnocken 10,11 vorgesehen, wobei die federnden Zungen 8,9 in gekrümmter Form vorgesehen sind. Infolge ihrer Krümmung werden die federnden Zungen 8,9 radial nach innen gebogen (verformt), wobei im Verlauf der Montage die Rastnocken 10,11 in den korrespondierenden Ausnehmungen 12,13 im Bereich des Führungselementes 7 eingreifen. Auch hier ist der mehrkantig ausgebildete Aufnahmebereich 4' im Bereich der Hülse 5 vorgesehen.

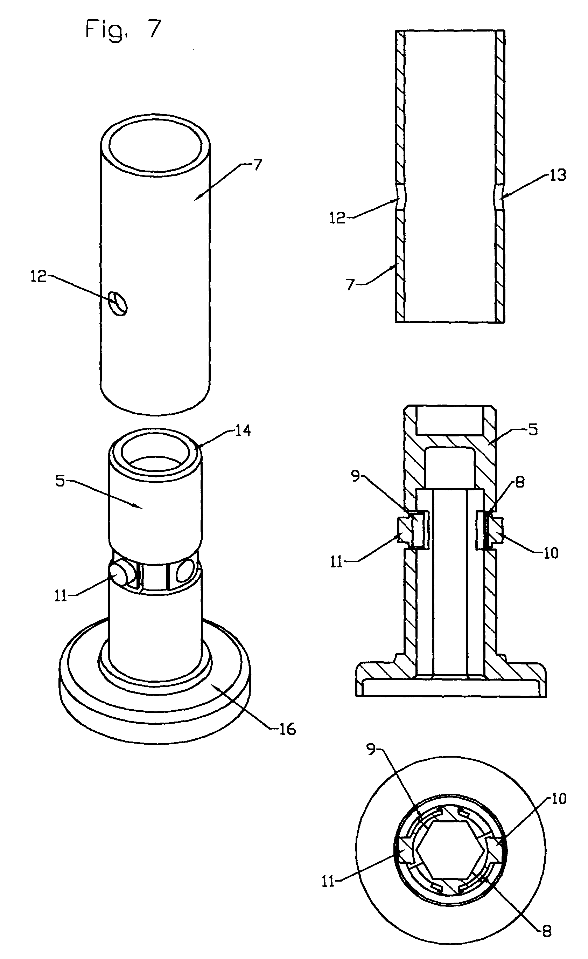

Figur 7 zeigt eine Ausgestaltung der mit Rastnocken 10,11 versehenen Rastbereiche. In diesem Beispiel sind mit federnden Zungen 8,9 versehene Rastnocken 10,11 in entsprechenden Ausnehmungen des hülsenartig ausgebildeten Körpers 5 vorgesehen, wobei der Aufbau etwa analog zu Figur 6 vorgesehen ist.

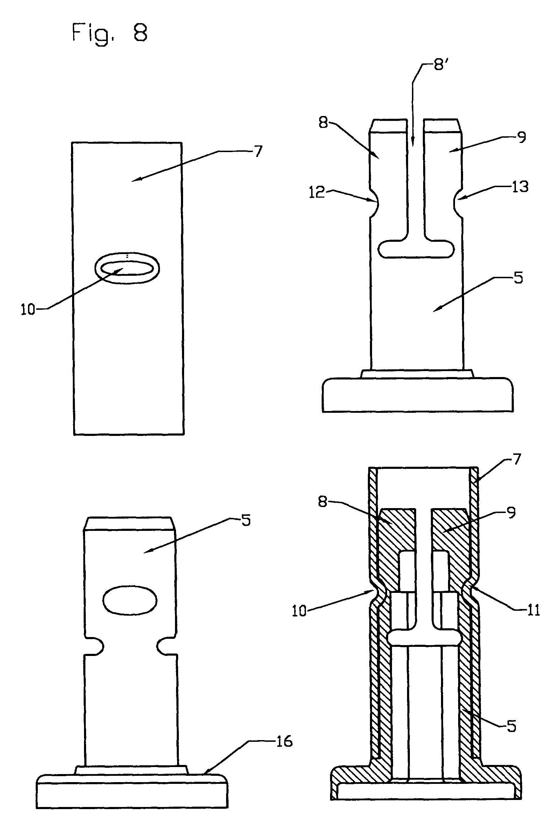

Figur 8 zeigt eine weitere Ausgestaltungsform zur Bildung von Rastbereichen sowie Aufnahmebereichen. Erkennbar ist der hülsenartig ausgebildete Körper 5 sowie das rohrartig ausgebildete Führungselement 7. Abweichend zu den vorausgegangenen Figuren weist der Körper 5 einen geschlitzten Bereich 8' auf, so daß federnde Zungen 8,9 gebildet werden. Im Bereich dieser federnden Zungen 8,9 sind zumindest partiell umlaufende Ausnehmungen 12,13 vorgesehen. In diesem Beispiel ist das Führungselement 7 mit Rastnocken 10,11 versehen, die unter radialer Verformung der federnden Zungen 8,9 in die Ausnehmungen 12,13 des Körpers 5 eingreifen.

Somit liegt hier eine zu den vorangegangenen Figuren 1 bis 7 umgekehrte Bauform vor, die jedoch ebenfalls mit als unter den Schutzbereich fallend anzusehen ist.

## Patentansprüche

1. Einrichtung zur Befestigung eines einen Rotationskörper, insbesondere eine Laufrolle, aufnehmenden Tragelementes (1) im Bereich eines Führungselementes (7), mit einem im Bereich des Tragelementes (1) vorgesehenen Zapfen (4) sowie einem sich zwischen Trag- (1) und Führungselement (7) erstreckenden Körper (5), wobei das Tragelement (1), das Führungselement (7) und der Körper (5) dergestalt durch Ineinanderstecken miteinander verbindbar sind, dass mindestens eines der ineinander steckbaren Bauteile (4,5,7) mindestens einen elastisch nachgebbaren Rastbereich (10,11) beinhaltet, der mit einem korrespondierenden Aufnahmebereich (12,13) mindestens eines weiteren Bauteiles (4,5,7) in Wirkverbindung bringbar ist.

2. Einrichtung nach Anspruch 1, **dadurch gekennzeichnet, daß** der Zapfen (4) zylindrisch ausgebildet ist, **daß** der Körper (5) eine im wesentlichen zylindrische Hülse ist, und **daß** das Führungselement (7) ein Rohr ist, wobei im Bereich der Hülse (5) mindestens ein Rastbereich (10, 11) in Form mindestens eines Rastelementes vorgesehen ist, das in einen korrespondierenden Aufnahmebereich (12, 13) in Form einer Ausnehmung im Bereich des Rohres (7) eingreift.

3. Einrichtung nach Anspruch 1, **dadurch gekennzeichnet, daß** der Zapfen (4) als Mehrkant-, insbesondere Sechskantprofil ausgebildet ist, **daß** der Körper (5) eine im wesentlichen zylindrische Hülse mit Innenmehrkant-, insbesondere Innensechskantprofil ist, und **daß** das Führungselement (7) ein Rohr ist, wobei im Bereich der Hülse (5) mindestens ein Rastbereich (10,11) in Form mindestens eines Rastelementes vorgesehen ist, das in einen korrespondierenden Aufnahmebereich (12,13) in Form einer Ausnehmung im Bereich des Rohres (7) eingreift.

4. Einrichtung nach einem der Ansprüche 1 bis 3, **dadurch gekennzeichnet, dass** die Hülse (5) aus Kunststoff besteht.

5. Einrichtung nach einem der Ansprüche 1 bis 4, **dadurch gekennzeichnet, daß** das Rastelement (10,11) ein mit der Hülse einstückig verbundener Nocken ist.

6. Einrichtung nach einem der Ansprüche 1 bis 4, **dadurch gekennzeichnet, daß** der Rastbereich (10,11) Teil eines mit der Hülse (5) in Wirkverbindung bringbaren Bauteiles () ist.

7. Einrichtung nach einem der Ansprüche 1 bis 6, **dadurch gekennzeichnet, daß** das Bauteil durch einen Bügel mit etwa U-förmigem Querschnitt gebildet ist, der im Bereich seiner freien Enden mit Rastnocken (10,11) versehen ist.

8. Einrichtung nach einem der Ansprüche 1 bis 6, **dadurch gekennzeichnet, daß** das Bauteil durch mindestens ein gekrümmt ausgebildetes Federelement gebildet ist.

9. Einrichtung nach einem der Ansprüche 1 bis 8, **dadurch gekennzeichnet, dass** im dem Führungselement (7) zugewandten Umfangsbereich des Körpers (5) mit einem Rastnocken (10, 11) versehene federnde Zungen (8, 9) vorgesehen sind.

10. Einrichtung nach einem der Ansprüche 1 bis 4, **gekennzeichnet durch** einander gegenüberliegende mit Nocken (10, 11) versehene federnde Zungen (8, 9) im Bereich der Hülse (5).

11. Einrichtung nach einem der Ansprüche 1 bis 5, **dadurch gekennzeichnet, dass** der von dem Körper (5) umschlossene Zapfen (4) durch mindestens eine der federnden Zungen (8, 9) im montierten Zustand geklemmt ist.

12. Einrichtung nach einem der Ansprüche 1 bis 6, **dadurch gekennzeichnet, dass** im Bereich mindestens einer der federnden Zungen (8, 9) mindestens eine in Richtung des Zapfens (4) weisende Verdickung vorgesehen ist.

13. Einrichtung nach einem der Ansprüche 1 bis 12, **dadurch gekennzeichnet, daß** die Hülse (5) unter Bildung von Rastbereiche (10,11) bildenden in axialer Richtung verlaufenden federnden Zungen (8,9) in Wirkverbindung mit einem mindestens einen Aufnahmebereich (12,13) aufweisenden Führungselement (7) bringbar ist.

14. Einrichtung nach einem der Ansprüche 1 bis 13, **dadurch gekennzeichnet, daß** der Aufnahmebereich (12,13) des Führungselementes eine ggf. partiell umlaufende Sicke im Bereich der zugehörigen federnden Zunge (8,9) ist, die in Wirkverbindung mit dem durch eine Einbuchtung gebildeten elastisch nachgiebigen Rastbereich (10,11) der Hülse (5) bringbar ist.
